# EUROPÄISCHE PATENTSCHRIFT

(11) **EP 3 870 839 B1**
(45) Veröffentlichungstag und Bekanntmachung des Hinweises auf die Patenterteilung: **12.07.2023**
(21) Anmeldenummer: 19794943.1
(22) Anmeldetag: 22.10.2019
(51) Int. Cl.: F03D 1/06

(54) **ROTORBLATTVERLÄNGERUNG**
ROTOR BLADE EXTENSION
ALLONGEMENT DE PALE DE ROTOR

(30) Priorität: 22.10.2018 DE 102018218067
(43) Veröffentlichungstag der Anmeldung: 01.09.2021
(73) Patentinhaber: Fraunhofer-Gesellschaft zur Förderung der angewandten Forschung e.V., 80686 München (DE)
(72) Erfinder: ROSEMEIER, Malo, 27572 Bremerhaven (DE); BÄTGE, Moritz, 10117 Berlin (DE); LINDERMANN, Matthias, 27572 Bremerhaven (DE)
(74) Vertreter: Pfenning, Meinig & Partner mbB
(86) Internationale Anmeldenummer: PCT/EP2019/078756
(87) Internationale Veröffentlichungsnummer: WO 2020/083930

(56) Entgegenhaltungen:
- EP-A1- 2 444 657
- EP-A1- 2 749 765
- WO-A1-2018/050192

## Beschreibung

Die Erfindung liegt auf dem Gebiet des Maschinenbaus und ist mit besonderem Vorteil in der Windenergietechnik einsetzbar. Sie betrifft grundsätzlich die nachträgliche Verlängerung von Rotorblättern für Windenergieanlagen.

Rotorblätter für Windenergieanlagen werden üblicherweise vor der Herstellung so berechnet und ausgelegt, dass sie bei Einsatz bekannter Materialien mit ebenfalls bekannten Parametern den auftretenden mechanischen und Umweltbelastungen zumindest für eine voraussichtliche Betriebszeit standhalten. Bei derartigen Berechnungen werden Sicherheiten mit eingerechnet, die verschiedene unbekannte oder schwer abschätzbare Parameter oder Probleme bei der Einschätzung von Materialeigenschaften oder Alterungseigenschaften berücksichtigen.

Oft ist es möglich, bei einer verbesserten Kenntnis über Materialeigenschaften oder Alterungseigenschaften oder nach Einberechnung von Wetterdaten durch bessere Windstärkeprognosen die Simulationen bei der Berechnung von Belastungen von Windenergieanlagen zu verbessern. Hierdurch ist es oft möglich, die Belastbarkeit von Windenergieanlagen dadurch besser auszunutzen, dass Rotorblattverlängerungen vorgesehen werden. Hierdurch vergrößern sich teilweise mechanische Belastungen, die auf die Rotorblätter wirken; dies wird jedoch entweder durch tatsächlich geringere auftretende Windstärken oder durch ein geändertes Betriebsverhalten kompensiert, oder es ist sicherzustellen, dass die Teile der Windenergieanlage tatsächlich höheren Belastungen ausgesetzt werden können.

Es ist bereits bekannt, Rotorblattverlängerungen an den Spitzen von vorhandenen Rotorblättern einer Windenergieanlage anzubringen. Hierzu geht aus der DE 10 2008 054 323 A1 eine Konstruktion für eine Blattspitzenverlängerung hervor. Die Blattspitzenverlängerung wird dort einerseits mit der Oberfläche des ursprünglichen Rotorblatts verklebt und andererseits durch eine in die Blattspitzenverlängerung eingefügte schmale Rippe, in die die

Spitze des ursprünglichen Rotorblatts eintaucht, stabilisiert.

Die WO2018050192 A1 offenbart eine Rotorblattverlängerung gemäss dem Oberbegriff der Ansprüche 1 und 11.

Der vorliegenden Erfindung liegt vor dem Hintergrund des Standes der Technik die Aufgabe zugrunde, die Verlängerung eines Rotorblatts einer Windenergieanlage so zu gestalten, dass eine verbesserte mechanische Festigkeit und Haltbarkeit erreicht wird.

Die Aufgabe wird mit den Merkmalen der Erfindung durch ein Verlängerungspasselement gemäß Patentanspruch 1 gelöst. Die Patentansprüche 2 bis 7 stellen vorteilhafte Ausgestaltungen dar. Die Erfindung bezieht sich weiterhin auf ein verlängertes Rotorblatt für eine Windenergieanlage.

Demgemäß bezieht sich die Erfindung auf ein Verlängerungspasselement für ein Rotorblatt einer Windenergieanlage, das als Rotorblattrippe mit einer Ausnehmung ausgebildet ist und das auf die Rotorblattspitze eines zu verlängernden Rotorblattes derart aufschiebbar ist, dass die Rotorblattspitze durch die Ausnehmung hindurchragt und sich formschlüssig an die Umfangsfläche der Ausnehmung anlegt, wobei das Verlängerungspasselement an seinem äußeren Umfang eine äußere Umfangsfläche aufweist, auf die eine schalenförmige Rotorblattverlängerung formschlüssig aufschiebbar ist, wobei das Verlängerungspasselement einen Kern aus einem Leichtbauwerkstoff, insbesondere einem Schaumstoff, insbesondere PU-, PVC-Schaumstoff, oder Balsaholz, aufweist und an seiner äußeren Umfangsfläche und/oder an seiner inneren Umfangsfläche eine Beschichtung aus einem Schichtverbundmaterial, insbesondere einem faserverstärkten Schichtverbundmaterial aufweist, und wobei der Kern des Verlängerungspasselements Ausnehmungen, insbesondere Schlitze und/oder Bohrungen aufweist, die mit einem Werkstoff gefüllt sind, der eine höhere Festigkeit und/oder Steifigkeit aufweist als der Werkstoff des Kerns.

Die Umfangsfläche der Ausnehmung für die Rotorblattspitze entspricht dabei der inneren Umfangsfläche des Verlängerungspasselementes.

Unter der formschlüssigen Anpassung der inneren Umfangsfläche des Verlängerungspasselements an die Außenkontur des ursprünglichen Rotorblatts sowie der entsprechenden Formgebung am äußeren Umfang des Verlängerungspasselements zum formschlüssigen Aufschieben der Rotorblattverlängerung soll eine Formanpassung verstanden werden, die es erlaubt, das Verlängerungspasselement mit dem ursprünglichen Rotorblatt sowie mit der Rotorblattverlängerung flächig zu verkleben oder durch eine andere Fügetechnik, wie beispielsweise Infusion, wie z.B. aus der WO 2018/050 194 A1 bekannt, zu verbinden.

Das Verlängerungspasselement kann beispielsweise auch an seinem äußeren Umfang Stege oder Ausnehmungen aufweisen, wobei die Außenkontur der Stege der Innenkontur der aufzusetzenden Rotorblattspitze entspricht. Es entstehen dann zwischen dem Verlängerungspasselement und der aufzusetzenden Rotorblattverlängerung Hohlräume, die nach dem Aufschieben der Rotorblattverlängerung mit einem flüssigen Klebstoff gefüllt werden können. Die Stege auf dem Verlängerungspasselement können beispielsweise parallel zur Z-Achse des Rotorblattes verlaufen und aus einem Material bestehen, auf dem die Rotorblattverlängerung mit wenig Reibung rutscht, beispielsweise PTE oder PTFE. Die Hohlräume zwischen den Stegen können beispielsweise durch Bohrungen, die eine Halbschale der Rotorblattverlängerung durchsetzen, mit Kleber gefüllt werden. Die Bohrungen können danach verschlossen werden.

Unter dem Kern soll in diesem Zusammenhang das wesentliche Volumen des Verlängerungspasselements zwischen seiner inneren Umfangsfläche und seiner äußeren Umfangsfläche mit Ausnahme der Beschichtungen verstanden werden. Die Materialstärke des Verlängerungspasselements entlang seiner äußeren und/oder inneren Umfangsfläche kann gemäß den Anforderungen der Formgebung variabel sein. Dies erfordert besondere Herstellungsverfahren, da übliche Herstellungsverfahren vorwiegend für Körper mit konstanter Schichtdicke eingerichtet sind.

Die Beschichtung des Verlängerungspasselements mit einem Schichtverbundmaterial kann beispielsweise aus einer Matrix, insbesondere einem Harz bestehen, wobei die Matrix insbesondere faserverstärkt sein kann. Die Faserverstärkung kann uniaxial, biaxial oder triaxial mit verschiedenen Gelegeschichten ausgebildet sein. Es ist sinnvoll, einen festen Verbund zwischen dem Leichtbauwerkstoff und den Beschichtungen herzustellen, so dass Lasten formschlüssig übertragen werden können.

Die durch die beispielsweise. im Vacuum Assisted Resin Transfer Molding (VARTM)-Verfahren infundierten Schlitze/Bohrungen gebildeten Verstärkungsbereiche erhöhen insbesondere, wenn sie im Bereich zwischen den Hauptgurten des Rotorblatts angeordnet sind, die Stabilität bezüglich Belastungen in Schlagrichtung, und in dem Bereich der vorderen und hinteren Profilkante des Rotorblatts wird die Stabilität in Schwenkrichtung verstärkt.

Es kann deshalb beispielsweise vorgesehen sein, dass die Ausnehmungen, in Form von Schlitzen und/oder Bohrungen insbesondere in dem Bereich des Verlängerungspasselementes, der bei der Verwendung an einem zu verlängernden Rotorblatt zwischen den Gurten des Rotorblattes liegt, mit ihren Schlitzebenen und/oder Bohrungslängsachsen quer, insbesondere senkrecht zur Profilsehne des Verlängerungspasselements verlaufen.

Die Schlitze und/oder Bohrungen können dabei mit einem Material gefüllt sein, das auch als Matrix des Beschichtungsmaterials für die Beschichtung des Verlängerungspasselementes verwendet wird, es kann jedoch zur Füllung der Schlitze und Bohrungen ein von diesem verschiedenes Material verwendet werden.

Das Infusionsmaterial in den Ausnehmungen/Schlitzen und/oder Bohrungen kann vorteilhaft mit der Beschichtung des Verlängerungspasselementes fest verbunden, beispielsweise verklebt sein oder mit diesem einstückig hergestellt sein und zusammenhängen.

Dabei können die Schlitze in dem Leichtbauwerkstoff beispielsweise derart angeordnet sein, dass sie sich von der inneren und von der äußeren Umfangsfläche des Verlängerungspasselements jeweils senkrecht zu diesen Flächen und senkrecht zur Schwenkrichtung des Rotorblatts erstrecken. Es kann beispielsweise auch vorgesehen sein, dass, falls Bohrungen vorgesehen sind, diese sich abschnittsweise von der inneren Umfangsfläche des Verlängerungspasselements bis zur äußeren Umfangsfläche erstrecken. Es kann vorgesehen sein, dass die Schlitze, die sich von der inneren Umfangsfläche des Verlängerungspasselements in den Leichtbauwerkstoff hinein erstrecken, äquidistant zueinander angeordnet sind und dass die Schlitze, die sich von der äußeren Umfangsfläche des Verlängerungspasselements in das Innere des Leichtbauwerkstoffs erstrecken, ebenfalls untereinander äquidistant verteilt sind, wobei die erste Gruppe von Schlitzen, die sich von der inneren Umfangsfläche des Verlängerungspasselements aus erstreckt, gegenüber der zweiten Gruppe von Schlitzen, die sich von der äußeren Umfangsfläche her in das Innere des Verlängerungspasselements erstreckt, um eine Hälfte des jeweiligen Abstands zwischen den Schlitzen versetzt ist. Im vorderen und hinteren Profilkantenbereich des Verlängerungspasselements können sich die Schlitze ebenfalls senkrecht von der äußeren und/oder der inneren Umfangsfläche her in das Innere des Leichtbaumaterials hinein erstrecken.

Der Leichtbauwerkstoff des Verlängerungspasselementes kann auch inhomogen bzgl. seiner Dichte gestaltet sein und an seiner Außenseite dichter sein als innen, um dem zu tiefen Eindringen von Klebstoff entgegenzuwirken. Die Poren des Werkstoffs können auch bei einem Schaumstoffmaterial an der Außenseite geschlossen sein.

Vorteilhaft kann zudem vorgesehen sein, dass die Ausdehnung (D) des Verlängerungspasselements in Richtung (z) der Längsachse des Rotorblatts wenigstens 20 % seiner größten Ausdehnung (E) in Schwenkrichtung (t-Richtung) des Rotorblattes beträgt.

Gemäß dem Stand der Technik findet eine Befestigung einer Rotorblattverlängerung an einem ursprünglichen Rotorblatt im Wesentlichen an zwei Stellen entlang der Rotorblattlängsachse statt, nämlich einerseits dort, wo die aufgeschobene Rotorblattverlängerung mit der Oberfläche des ursprünglichen Rotorblatts in Berührung ist und verklebt wird, und weiter an der Stelle, an der das ursprüngliche Rotorblatt in eine Rippe im Inneren der Rotorblattverlängerung eintaucht. Auf diese Weise werden Kräfte und Biegemomente der Rotorblattverlängerung auf das ursprüngliche Rotorblatt übertragen.

Es gelingt mit der Erfindung, eine bessere Verbindung zwischen der Rotorblattverlängerung und dem ursprünglichen Rotorblatt dadurch zu schaffen, dass ein wesentlicher Teil der Kräfte aus der Rotorblattverlängerung unmittelbar mithilfe eines Verlängerungspasselements gemäß der Erfindung auf das ursprüngliche Rotorblatt übertragen wird. Zusätzlich kann das rotorachsennahe Ende der Rotorblattverlängerung mit der Oberfläche des ursprünglichen Rotorblatts verklebt sein.

Durch die angegebene Mindestlänge des Verlängerungspasselements in Richtung der Rotorblattlängsachse kann dieses Verlängerungspasselement, mit dem sowohl das ursprüngliche Rotorblatt, insbesondere dessen Rotorblattspitze, als auch die Rotorblattverlängerung formschlüssig verbunden sind, problemlos größere Torsions-, Schwenk- oder Schlagmomente übertragen. Zudem ergibt sich eine große Berührungsfläche zwischen dem Verlängerungspasselement einerseits und der Rotorblattverlängerung andererseits sowie dem ursprünglichen, zu verlängernden Rotorblatt, wobei diese Berührungsflächen jeweils zur zuverlässigen Verklebung der verschiedenen Elemente miteinander verwendet werden können. Hierdurch kann eine sehr zuverlässige und leistungsfähige Verbindung zwischen dem ursprünglichen Rotorblatt, dem Verlängerungspasselement und der Rotorblattverlängerung geschaffen werden.

Das Verlängerungspasselement hat im Wesentlichen die Form einer Rotorblattrippe, wobei eine Öffnung zum Einschieben der Spitze des ursprünglichen Rotorblatts vorgesehen ist, so dass das Verlängerungspasselement eine äußere und eine innere Umfangsfläche aufweist. Die innere Umfangsfläche wird auf das ursprüngliche Rotorblatt aufgeschoben, während die Rotorblattverlängerung auf die äußere Umfangsfläche des Verlängerungspasselements aufgeschoben wird. Das Verlängerungspasselement weist zudem zwei Seitenflächen auf, die beispielsweise jeweils eben und parallel zueinander verlaufen können. Die Breite des Verlängerungselements in Richtung z zwischen den beiden Seitenflächen kann vorteilhaft auf wenigstens 25 % oder wenigstens 30 % seiner größten Ausdehnung in Schwenkrichtung des Rotorblatts betragen. In dem Fall, dass die beiden Seitenflächen des Verlängerungspasselements nicht parallel zueinander verlaufen, wird unter der Breite des Verlängerungspasselements der Abstand zwischen den beiden Seitenflächen in z-Richtung an der schmalsten Stelle verstanden.

Es kann in einer Ausführungsform außerdem vorgesehen sein, dass der Kern Bohrungen aufweist, deren Bohrungslängsachsen im Wesentlichen senkrecht oder in einem Winkel zwischen 90 und 45 Grad zur äußeren Umfangsfläche des Verlängerungspasselements in einer Ebene senkrecht zur Profilsehne des Verlängerungspasselements verlaufen und die mit einem Werkstoff gefüllt sind, der eine höhere Festigkeit und/oder Steifigkeit aufweist als der Werkstoff des Kerns. Auch in diesem Fall kann, wie zudem auch in den übrigen, weiter unten erwähnten Fällen, der Füllwerkstoff der Schlitze oder Bohrungen mit der Matrix des Beschichtungswerkstoff des Verlängerungspasselementes identisch oder von dieser verschieden sein.

Es kann auch eine Mehrzahl von Bohrungen vorgesehen sein, deren Bohrungslängsachsen in einer Ebene senkrecht zur Profillängsachse (Profilsehne) des Verlängerungspasselements verlaufen und untereinander jeweils Winkel zwischen 30 und 150 Grad, insbesondere 70 bis 110 Grad, weiter insbesondere 90 Grad einschließen und die mit einem Werkstoff gefüllt sind, der eine höhere Festigkeit und/oder Steifigkeit aufweist als der Werkstoff des Kerns. Damit verlaufen die einzelnen Bohrungen innerhalb der Ebenen, die beim Vorsehen von Schlitzen gemäß den obigen Ausführungen durch die Schlitze definiert würden. Durch das Vorsehen von Bohrungen wird das zu füllende Volumen der Ausnehmungen in dem Leichtbauwerkstoff verringert, wobei durch die Orientierung und Positionierung der Bohrungen eine optimale Festigkeitserhöhung erzielt wird.

Generell kann vorgesehen sein, dass die Ausnehmungen, insbesondere Schlitze und Bohrungen, in dem Verlängerungspasselement derart positioniert sind, dass nach dem Einbau des Verlängerungspasselementes und der Rotorblattverlängerung wenigstens ein Teil der Ausnehmungen, insbesondere Schlitze und/oder Bohrungen, im Bereich der lasttragenden Bereiche des Profils des zu verlängernden Rotorblattes, insbesondere zwischen den Gurten des zu verlängernden Rotorblattes, angeordnet sind. Dies schließt nicht aus, dass zusätzliche Schlitze und/oder Bohrungen im vorderen und/oder hinteren Profilkantenbereich des Verlängerungspasselements vorgesehen sind.

Eine weitere Ausführungsform des Verlängerungspasselements kann vorsehen, dass wenigstens ein Teil der Ausnehmungen, insbesondere Schlitze und/oder Bohrungen, in den lasttragenden Bereichen des Verlängerungspasselements angeordnet sind und sich jeweils bis zu der Beschichtung an der äußeren oder inneren Umfangsfläche des Verlängerungspasselements erstrecken.

Die Erfindung bezieht sich außer auf ein Verlängerungspasselement der oben erläuterten Art auch auf ein verlängertes Rotorblatt für eine Windenergieanlage mit einem ursprünglichen Rotorblatt und einem auf dieses aufgeschobenen Verlängerungspasselement der oben beschriebenen Art sowie mit einer auf das Verlängerungspasselement aufgeschobenen Rotorblattverlängerung.

Weiter bezieht sich die Erfindung auch auf ein verlängertes Rotorblatt für eine Windenergieanlage mit einem ursprünglichen Rotorblatt und einem auf dieses aufgeschobenen Verlängerungspasselement der oben beschriebenen Art, wobei das Verlängerungspasselement mit einer Rotorblattverlängerung verbunden ist, derart, dass das Verlängerungspasselement einen integrierten Bestandteil der Rotorblattverlängerung bildet.

Eine Rotorblattverlängerung kann typischerweise aus zwei miteinander verbundenen Halbschalen bestehen, wobei die Halbschalen einschichtig oder mehrschichtig aufgebaut sein können. Bei einem einschichtigen Aufbau kann zumindest an einer Halbschale oder auch an beiden Halbschalen ein Verlängerungspasselement unmittelbar befestigt sein.

Die Rotorblattverlängerung kann im montierten Zustand gerade in Längsrichtung des Rotorblatts verlaufen oder auch zur Druckseite hin in Schlagrichtung gebogen sein, um eine Verformung des Rotorblattes im Betrieb auszugleichen. Die Rotorblattverlängerung kann auch ein Winglet aufweisen, das sich vom Rotorblatt aus in Schlagrichtung erstreckt.

Weist die Rotorblattverlängerung bei jeder ihrer Halbschalen einen Schichtaufbau auf, der eine äußere Beschichtung sowie einen Leichtbauwerkstoff und eine innere Beschichtung aufweist, so kann die innere Beschichtung einer oder beider Halbschalen jeweils unmittelbar mit der äußeren Beschichtung des Verlängerungspasselements verbunden sein oder die äußere Beschichtung des Verlängerungspasselements bilden. Auf diese Weise kann die Kombination aus dem Verlängerungspasselement und der Rotorblattverlängerung als ein einziges Bauteil fabrikseitig hergestellt und im Ganzen auf ein ursprüngliches Rotorblatt aufgeschoben werden.

Somit kann sich die Erfindung auch auf ein verlängertes Rotorblatt für eine Windenergieanlage mit einem zu verlängernden Rotorblatt und einem auf dieses aufgeschobenen Verlängerungspasselement beziehen, wobei das Verlängerungspasselement mit einer Rotorblattverlängerung verbunden ist, derart, dass eine Beschichtung aus einem Schichtverbundmaterial an der äußeren Umfangsfläche des Verlängerungspasselements eine Schicht der Rotorblattverlängerung bildet.

Die Erfindung bezieht sich zudem auf ein Verfahren zur Herstellung eines Verlängerungspasselements für ein Rotorblatt einer Windenergieanlage, das als Rotorblattrippe mit einer Ausnehmung ausgebildet ist und das auf die Rotorblattspitze eines zu verlängernden Rotorblattes derart aufschiebbar ist, dass die Rotorblattspitze durch die Ausnehmung hindurchragt und sich formschlüssig an die Umfangsfläche der Ausnehmung anlegt, wobei das Verlängerungspasselement an seinem äußeren Umfang eine äußere Umfangsfläche aufweist, auf die eine schalenförmige Rotorblattverlängerung formschlüssig aufschiebbar ist, dadurch gekennzeichnet, dass zunächst aus einem Leichtbauwerkstoff der Kern des Verlängerungspasselementes geformt wird und dass darauf, ausgehend von einer inneren und/oder äußeren Umfangsfläche des Kerns, entweder Schlitze oder Bohrungen in diesem geformt werden, wobei die Schlitzebenen sich quer, insbesondere senkrecht zur Profilsehne des Verlängerungspasselementes erstrecken oder die Bohrungslängsachsen sich in Richtung der so definierten Schlitzebenen erstrecken, und dass der Kern mit einem faserverstärkten Schichtverbundmaterial mit einem Verbund aus Matrixmaterial und Verstärkungsfasern beschichtet wird, wobei die Schlitze oder Bohrungen mit einem Infusionsmaterial, insbesondere mit dem Matrixmaterial, gefüllt werden.

Dabei werden die Schlitze/Bohrungen in einem einzelnen Schritt oder gemeinsam mit den Verstärkungsfasern der Beschichtung im Vacuum Assisted Resin Transfer Molding (VARTM)-Verfahren mit einem Infusionsmaterial, insbesondere dem Matrixmaterial infundiert .

Die Herstellung des Verlängerungspasselementes erlaubt durch die verstärkten Bereiche in den Schlitzen/Bohrungen des Leichtbauwerkstoffs eine gute und leistungsfähige formschlüssige Lastaufnahme und -übertragung. Dies gelingt besonders, wenn der Infusionswerkstoff in den Schlitzen/Bohrungen mit dem Matrixmaterial der Beschichtungen des Verlängerungspasselementes fest verbunden ist. Dies kann insbesondere dann erreicht werden, wenn die Schlitze/Bohrungen gemeinsam mit der Beschichtung z.B. im VARTM Verfahren infundiert werden.

Es kann beispielsweise vorgesehen sein, dass der Kern des Verlängerungspasselementes entweder aus einem Block eines Leichtbauwerkstoffs, insbesondere eines Schaumstoffs, weiter insbesondere eines PVC-Schaumstoffs, durch Materialabtragung gebildet oder durch Schäumen in eine Form oder durch ein additives Herstellungsverfahren geformt wird. Es besteht bei diesen Herstellungsverfahren ausreichende Gestaltungsfreiheit für die äußere Form des Verlängerungspasselementes und auch für die Form, Lage und Ausrichtung der Ausnehmungen in Form von Schlitzen und/oder Bohrungen. Werden bei der Bearbeitung abtragende Verfahren gewählt, so können Schlitze/Bohrungen sowie die Ausnehmung und äußere Kontur des Verlängerungspasselementes mit einer Säge, Fräse, Ultraschallmesser oder heißem Draht abgetragen werden.

Es kann zudem bei dem Verfahren vorgesehen sein, dass der Kern des Verlängerungspasselementes durch ein additives Herstellungs-verfahren geformt wird, wobei die Schlitze und/oder Bohrungen unmittelbar bei dem additiven Herstellungsverfahren ausgenommen werden oder direkt durch einen Wechsel des Auftragskopfes mit einem anderen Werkstoff erzeugt werden. Damit können die besonderen Vorteile von additiven Herstellungsverfahren besonders gut genutzt werden, da der Herstellungsprozess verkürzt und Materialabfall minimiert wird. Durch die Kombination der additiven Herstellungsverfahen und Verwendung verschiedener Werkstoffe für den Kern und die Füllung von Schlitzen/Bohrungen bei einem solchen Verfahren kann die Herstellung insgesamt noch effizienter gestaltet werden, und es kann ein Verguss-/Infusionsschritt vermieden oder einfacher gestaltet und nur auf eine äußere Beschichtung begrenzt werden.

Bei einem solchen Verfahren kann zudem vorgesehen sein, dass die additive Auftragsstrategie entlang gekrümmter Bahnen für faserverstärkte Werkstoffe in sechs Achsen realisiert wird.

Das Herstellungsverfahren für den Kern des Verlängerungspasselementes kann aus einer Kombination von subtraktiven Fertigungsverfahren, wie z.B. Fräsen, Sägen, Bohren und additiven Verfahren wie z.B. 3D-Druck oder Fibre Printing bzw. Tape-Legen erfolgen und ist somit als ein hybrides Herstellungsverfahren zu verstehen.

Weiter sind für die Erstellung der Schlitze und Bohrungen auch andere Fertigungsverfahren wie Lasern, Ultraschallschneiden oder die Bearbeitung mit einem heißen Draht denkbar.

Unter den additiven Fertigungsverfahren stellt insbesondere der 3D-Druck von expandierenden Schaummaterialen eine technische Neuheit dar sowie die mögliche Kombination mit einem weiteren additiven Verfahren zur Erzeugung bzw. Füllung der Schlitze als Versteifungselemente des Schaumkerns. Für die Versteifungen kann als Werkstoff wie oben bereits genannt Harz bzw. Matrix verwendet werden die über einen Druckkopf additiv appliziert werden. Weiter ist aber auch möglich dem Harz Glas- oder Kohlefasern in unterschiedlicher Länge beizumischen um so die mechanischen Eigenschaften des Werkstoffs und damit auch dem erzeugten Bauteil, in diesem Fall das Verlängerungspasselement, maßgeblich zu verbessern.

Zur technischen Realisierung des Verlängerungspasselementes bezieht sich die Erfindung ebenfalls auf den Fertigungsprozess über einen Portalroboter in 6 Achsen. Die 6 Achsen sind insbesondere für die Füllung der Schlitze in einem additiven Verfahren entlang einer gekrümmten Bahn wie z.B. des aerodynamischen Profils der Außen- oder Innenflächen des Verlängerungspasselementes notwendig und stellen eine technische Neuheit für eine additive Auftragsstrategie dar.

Im Folgenden wird die Erfindung anhand von Figuren einer Zeichnung gezeigt und nachfolgend erläutert. Dabei zeigt
- Fig. 1: eine perspektivische Ansicht eines verlängerten Rotorblatts mit dem angewendeten Koordinatensystem,
- Fig. 2: eine perspektivische Ansicht eines Verlängerungspasselements,
- Fig. 3: eine Querschnittsdarstellung eines Verlängerungspasselements senkrecht zur z-Richtung,
- Fig. 4: eine weitere Querschnittsdarstellung eines Verlängerungspasselements mit anderer Anordnung der Verstärkungselemente,
- Fig. 5: eine weitere Darstellung eines Verlängerungspasselements mit einer weiteren Anordnung von Verstärkungselementen,
- Fig. 6: eine Querschnittsdarstellung eines Verlängerungspasselements senkrecht zur t-Ebene, wobei zur Verstärkung Bohrungen eingebracht sind, die mit einem Infusionsmaterial gefüllt sind,
- Fig. 7: eine Darstellung einer Rotorblattverlängerung mit einem integrierten Verlängerungspasselement,
- Fig. 8: eine Ansicht des Elements aus Figur 7 aus der in Figur 7 mit VIII bezeichneten Richtung,
- Fig. 9, 10, 11: eine Detailansicht eines Oberflächenabschnitts eines Verlängerungspasselementes im Querschnitt mit einem Schlitz in verschiedenen Stadien des Herstellungsprozesses, sowie
- Fig. 12: eine perspektivische Ansicht eines Verlängerungspasselementes, das zur Infusion in eine Vakuumfolie verpackt ist.

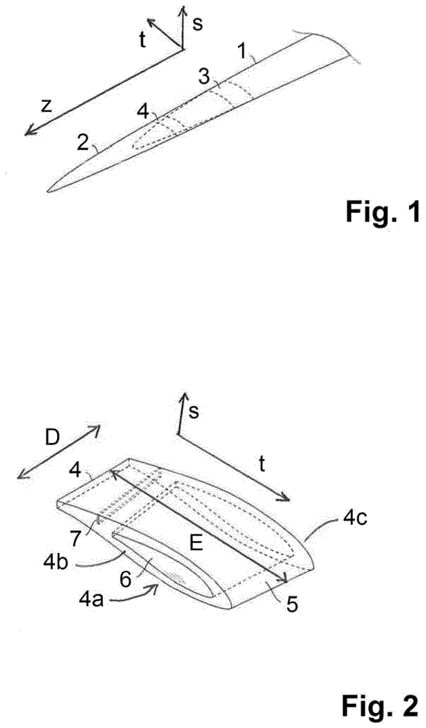

Figur 1 zeigt in einer perspektivischen Darstellung ein verlängertes Rotorblatt, das ein ursprüngliches, zu verlängerndes Rotorblatt 1 sowie eine Rotorblattverlängerung 2 und ein Verlängerungspasselement 4 aufweist. Das Verlängerungspasselement ist auf das ursprüngliche, zu verlängernde Rotorblatt 1 aufgeschoben und weist die Form einer Rippe auf, die das ursprüngliche Rotorblatt 1 umgibt. Die Rippe 4 erstreckt sich dabei um die vordere und die hintere Profilkante des ursprünglichen Rotorblatts 1 herum und nimmt das ursprüngliche Rotorblatt in einer Ausnehmung auf.

Auf die Spitze des ursprünglichen Rotorblatts 1 und das Verlängerungspasselement 4 ist die Rotorblattverlängerung 2 aufgeschoben, die beispielsweise aus zwei Halbschalen zusammengefügt ist und konstruktiv eine ähnliche Form wie ein übliches Rotorblatt aufweisen kann. Die Rotorblattverlängerung 2 kann mit dem Verlängerungspasselement 4 an dessen äußerer Umfangsfläche verklebt werden. Die Rotorblattverlängerung 2 ragt über das Verlängerungspasselement 4 in Richtung zur Rotationsachse der Windenergieanlage hinaus und ist in dem Bereich 3 (Verklebungsbereich) mit dem ursprünglichen Rotorblatt 1 beispielsweise durch eine Klebeverbindung fest verbunden. Das Verlängerungspasselement 4 kann mit dem ursprünglichen, zu verlängernden Rotorblatt 1 an der inneren Umfangsfläche des Verlängerungspasselements 4 ebenfalls durch Verklebung verbunden sein.

In Figur 1 ist zur weiteren Orientierung mit Geltung auch für die übrigen Figuren ein Koordinatensystem mit Bezug auf das Rotorblatt dargestellt. Die z-Achse weist dabei in die Richtung der Längsachse des Rotorblatts, die t-Achse in Schwenkrichtung, d. h. innerhalb der Rotationsebene der Rotorblätter, und die s-Achse in Schlagrichtung, d. h. senkrecht zu z und t.

In Figur 2 ist in perspektivischer Darstellung ein Verlängerungspasselement 4 gezeigt. Dieses kann für sich die Form eines aerodynamischen Profils mit einer äußeren Umfangsfläche 5 aufweisen. Das Verlängerungspasselement 4 kann überwiegend aus einem Leichtbauwerkstoff, wie beispielsweise Balsaholz oder einem Schaumstoff, bestehen. Das Verlängerungspasselement 4 weist eine Ausnehmung 4a in Form einer Durchgangsöffnung auf, die so geformt ist, dass sie einen Bereich des ursprünglichen, zu verlängernden Rotorblatts 1 formschlüssig aufnimmt. Die Ausnehmung 4a ist von der inneren Umfangsfläche 6 des Verlängerungspasselements 4 umgeben. In Figur 2 ist zudem beispielhaft ein Schlitz 7 dargestellt, der den Leichtbauwerkstoff des Verlängerungspasselements durchsetzt und der zur Stabilisierung mit einem verfestigten Infusionswerkstoff infundiert wird. Der Schlitz 7 ist nur beispielhaft für die vorgesehenen Ausnehmungen in dem Leichtbauwerkstoff dargestellt, und es wird weiter unten erläutert, wie eine Mehrzahl von Schlitzen oder anderen Formen von Ausnehmungen an dem Verlängerungspasselement verteilt werden kann, um eine erhöhte mechanische Stabilität zu erreichen.

Das Verlängerungspasselement weist zwei Seitenflächen 4b, 4c auf, die beispielsweise eben sein können und die beispielsweise auch parallel zueinander verlaufen können. Die Seitenflächen können jedoch auch einen spitzen Winkel untereinander einschließen.

Die Ausdehnung D des Verlängerungspasselements, d. h. bei parallelen Seitenflächen 4b, 4c der Abstand zwischen diesen, bei nicht parallelen Seitenflächen der Abstand der Seitenflächen voneinander in z-Richtung an der schmalsten Stelle, beträgt mindestens 20 %, insbesondere mindestens 30 % oder 40 % oder 50 % der Ausdehnung E des Verlängerungspasselements in t-Richtung (ebenfalls an der schmalsten Stelle gemessen).

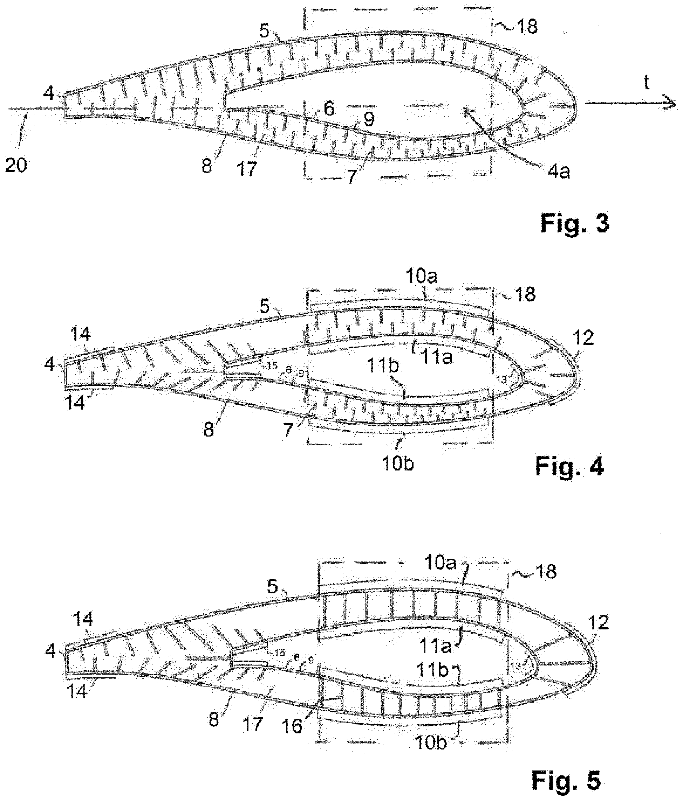

Figur 3 zeigt einen Querschnitt durch ein Verlängerungspasselement 4, wobei die Blickrichtung in z-Richtung des Koordinatensystems liegt. In der Figur ist an der äußeren Umfangsfläche 5 eine Beschichtung 8 des Verlängerungspasselements mit einem festen Werkstoff, beispielsweise einem Harzwerkstoff, dargestellt, der auch faserverstärkt sein kann. Die Faserverstärkung kann dabei unaxial oder auch mehrachsig gestaltet sein. Auch die innere Umfangsfläche 6 des Verlängerungspasselements 4 kann beispielsweise mit einer Beschichtung 9, beispielsweise aus einem Harzwerkstoff, versehen sein, der ebenfalls uniaxial oder auch mehrachsig faserverstärkt sein kann.

In Figur 3 sind zudem Schlitze 7 dargestellt, wobei insbesondere in dem lasttragenden Bereich des verlängerten Rotorblatts, der durch ein gestricheltes Rechteck 18 dargestellt ist, eine Mehrzahl von äquidistant parallel zueinander verteilten Schlitzen dargestellt ist und wobei eine erste Gruppe der Schlitze sich ausgehend von der inneren Umfangsfläche 6 senkrecht zu dieser in den Kern und den Leichtbauwerkstoff des Verlängerungspasselements hinein erstreckt und wobei sich eine zweite Gruppe von Schlitzen, ebenfalls untereinander äquidistant angeordnet, ausgehend von der äußeren Umfangsfläche 5 und senkrecht zu dieser in den Kern des Verlängerungspasselements hinein erstreckt. Die Schlitze 7 sind mit einem Harzwerkstoff infundiert, der auch durch Fasern verstärkt sein kann. Durch die derartige Anordnung der durch die Infusion entstehenden Verstärkungselemente wird eine besonders gute Festigkeit und Steifheit des Verlängerungspasselements in den lasttragenden Bereichen erzielt. Auch in den nicht primär lasttragenden Bereichen können entsprechende infundierte Schlitze vorgesehen sein. Da die Schlitze als Ausnehmungen in dem Kern an der Oberfläche des Kerns /Verlängerungspasselementes münden, können sie beispielsweise im Zuge der Beschichtung und Aufbringung einer Beschichtung 8, 9, die einen Infusionswerkstoff enthalten kann, mit gefüllt werden, insbesondere auch mit demselben Infusionswerkstoff, der für die Beschichtung verwendet wird. Damit ist ein guter Zusammenhalt der Füllungen in den Ausnehmungen, die Verstärkungsbereiche bilden, mit der Beschichtung gegeben.

Die Schlitze, die sich von der äußeren Umfangsfläche 5 in den Kern des Verlängerungspasselements 4 hinein erstrecken, und die Schlitze, die sich von der inneren Umfangsfläche 6 des Verlängerungspasselements in den Kern hinein erstrecken, können untereinander jeweils entlang den Umfangsflächen verschoben sein, insbesondere um den halben jeweils zwischen benachbarten Schlitzen vorgesehenen Abstand.

Auch im Bereich der vorderen und hinteren Profilkante können Ausnehmungen/Schlitze vorgesehen sein, die im Wesentlichen senkrecht auf der inneren oder äußeren Umfangsfläche des Verlängerungspasselements in diesem Bereich verlaufen.

In den Figuren 4 und 5 sind der Übersichtlichkeit halber an dem Verlängerungspasselement 4 die Hauptgurte 10a, 10b der Rotorblattverlängerung sowie die Hauptgurte 11a, 11b des zu verlängernden ursprünglichen Rotorblatts in der Position eingezeichnet, die sie relativ zu dem Verlängerungspasselement nach dem Einbau der Rotorblattverlängerung einnehmen. Zudem sind ein Vorderkantengurt 12 der Rotorblattverlängerung sowie ein Vorderkantengurt 13 des zu verlängernden Rotorblatts und ein Hinterkantengurt 14 der Rotorblattverlängerung sowie ein Hinterkantengurt 15 des zu verlängernden Rotorblatts eingezeichnet.

In Figur 5 sind beispielhaft Schlitze im Leichtbauwerkstoff 17 des Verlängerungspasselements 4 eingezeichnet, von denen auch einige zumindest abschnittsweise das gesamte Verlängerungspasselement durchsetzen können und zur Verfestigung mit Harz gefüllt werden. Es ist jedoch auch möglich, anstelle der Schlitze eine Vielzahl von Bohrungen vorzusehen, die jeweils gruppenweise parallel zueinander verlaufen und gemeinsam eine Gruppe von Ausnehmungen bilden, die die Kontur eines Schlitzes aufweisen, wobei der so gebildete Schlitz durchbrochen ist.

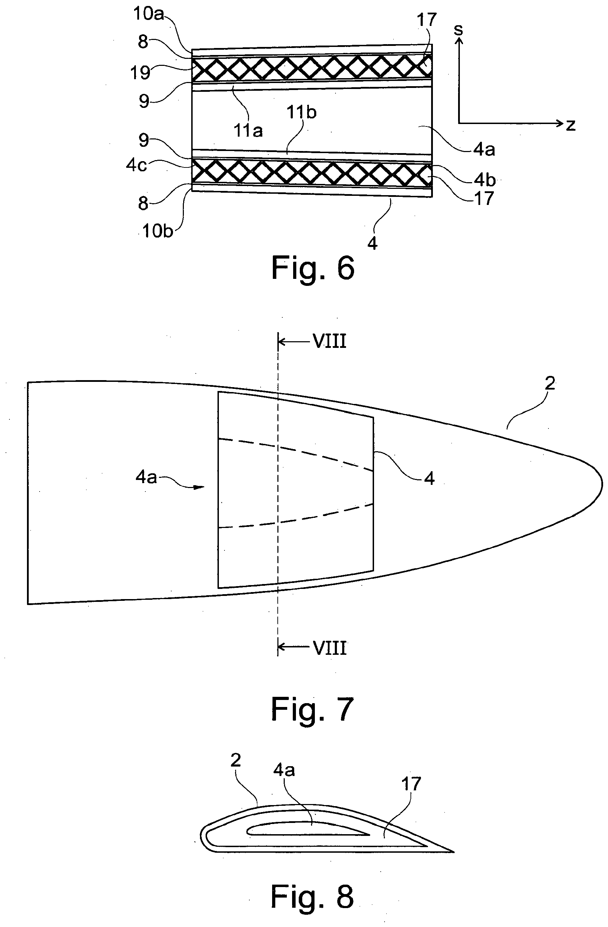

Diese Struktur ist detaillierter in Figur 6 in einem anders gelagerten Querschnitt dargestellt, der aus der Achsenrichtung t betrachtet ist. In der Figur ist das Verlängerungspasselement 4 mit Hauptgurten 10a, 10b der Rotorblattverlängerung sowie Hauptgurten 11a, 11b des ursprünglichen Rotorblatts dargestellt. In dem Kernbereich des Verlängerungspasselements, der aus dem Leichtbauwerkstoff 17 hergestellt ist, sind Bohrungen 19 eingebracht, die in einem Winkel von 45 Grad zu den äußeren und inneren Umfangsflächen 5, 6 des Verlängerungspasselements und in einer Ebene verlaufen, die parallel zur z-Richtung des Rotorblatts liegt. Dabei ist eine erste Gruppe von Bohrungen in einem ersten Richtungssinn um 45 Grad gegenüber einer Umfangsfläche des Verlängerungspasselements geneigt, und eine andere Gruppe von Bohrungen um 45 Grad in der entgegengesetzten Richtung, so dass die Bohrungen der verschiedenen Gruppen sich kreuzen und einander durchdringen. Dabei wird in dem gezeigten Beispiel innerhalb der Zeichenebene eine Durchbrechung des Kernbereichs des Verlängerungspasselements erzeugt, deren einhüllende Kontur die Form eines durchgehenden Schlitzes aufweist. Da die Bohrungen sich gegenseitig durchdringen, können sie vorteilhaft gemeinsam infundiert werden, so dass ein zusammenhängendes Verstärkungsgitter entsteht.

Die Figuren 7 und 8 zeigen eine bauliche Integration eines Verlängerungspasselements 4 in eine Rotorblattverlängerung 2. Die Zahl und Anordnung der Schlitze innerhalb des Verlängerungspasselements kann bei diesen Varianten ebenso gestaltet werden wie anhand der Figuren 3 bis 6 dargestellt.

Das in Figur 7 dargestellte Bauteil kann fabrikseitig vorgefertigt werden, so dass dieses Teil mitsamt dem Verlängerungspasselement 4 im Inneren der Rotorblattverlängerung 2 auf die Rotorblattspitze des zu verlängernden Rotorblatts 1 geschoben und dort verklebt werden kann.

Die Verbindung zwischen dem Kernbereich des Verlängerungspasselements 4 und der Rotorblattverlängerung 2, insbesondere der Außenhaut der Rotorblattverlängerung 2, kann beispielsweise dadurch realisiert sein, dass der Leichtbauwerkstoff 17, aus dem der Kern des Verlängerungspasselements 4 besteht, unmittelbar in die Außenhaut der Rotorblattverlängerung 2 eingebracht, d. h. beispielsweise eingeschäumt oder eingeklebt wird. Hierdurch wird der Montageaufwand vor Ort beim Aufbringen auf die zu verlängernden Rotorblätter vermindert.

Figur 8 zeigt einen Querschnitt der Rotorblattverlängerung 2 mit dem Verlängerungspasselement 4 in Richtung VIII wie in Figur 7 dargestellt.

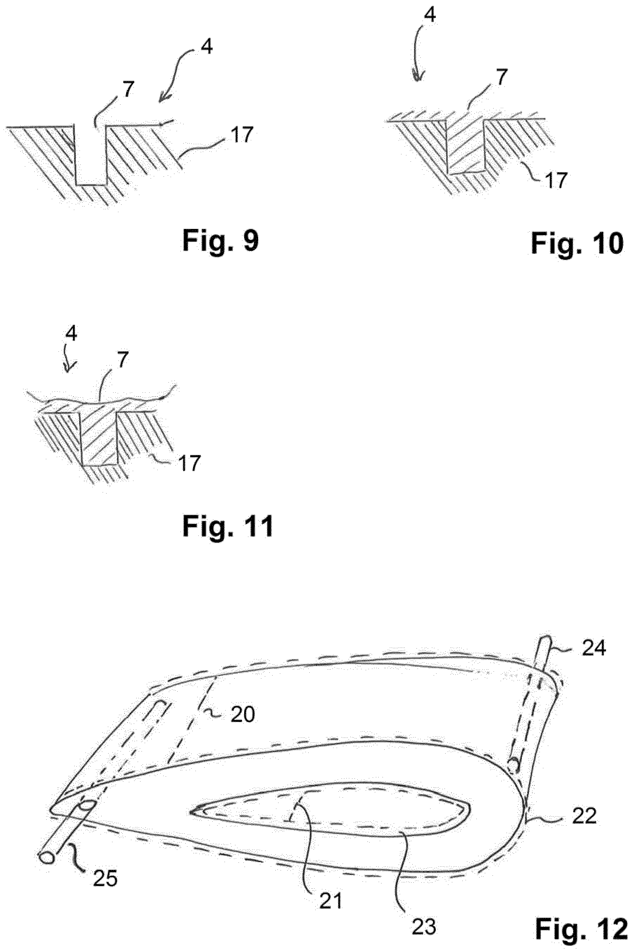

In den Figuren 9, 10 und 11 ist jeweils ein Ausschnitt aus dem Kernmaterial eines Verlängerungspasselementes 4 dargestellt, wobei in Figur 9 der Anfangszustand nach dem Einbringen von einem oder mehreren Schlitzen 7 in das Kernmaterial dargestellt ist.

In Figur 10 ist gezeigt, dass eine Beschichtung 8 aus einem Infusionswerkstoff auf die Oberfläche des Verlängerungspasselementes 4 aufgebracht und gleichzeitig in die Schlitze 7 eingebracht worden ist. In Figur 11 ist ergänzend gezeigt, dass in oder auf den Infusionswerkstoff noch eine oder mehrere Faserschicht(en)/Gelegeschicht(en) als Verstärkung aufgebracht werden kann/können. Die Beschichtung 8 und die Füllung der Schlitze/Ausnehmungen können gemeinsam aushärten.

In Figur 12 ist der mögliche Aufbau sowie die Vorgehensweise für die Vakuuminfusion dargestellt. Die äußere und innere Umfangsfläche der Rippe/des Verlängerungspasselementes wird jeweils mit Vakuumfolie bedeckt und an deren Enden, wie durch die gestrichelten Linien 20, 21 angedeutet, mit zwei Lagen eines vakuumdichten Klebebandes, inbesondere des sogenannten Tacky Tape sowohl an der äußeren als auch an der inneren Umfangsfläche zu je einem Schlauch verbunden. Stirnseitig wird für beide Seiten des Verlängerungspasselementes Vakuumfolie entsprechend der Innen- und Außenkontur zugeschnitten und mit den Folienschläuchen der Außen- und Innenfläche über ein vakuumdichtes Klebeband, insbesondere Tacky Tape vakuumdicht entlang der gestrichelten Linien 22, 23 verbunden. Damit ist das ,Verlängerungspasselement rundum vakuumdicht von einer Vakuumfolie umgeben. An einer Profilkante, insbesondere der vorderen Profilkante, kann eine Leitung 24 zur Absaugung von Luft die Vakuumfolie durchdringen. Es kann eine Vakuumleitung entlang der Profilkante an dem Verlängerungspasselement angeordnet werden.

An der gegenüberliegenden Profilkante, also im vorliegenden Beispiel der hinteren Profilkante, kann für die Einbringung des Harzes eine Angussleitung 25 vorgesehen sein, die vakuumdicht aus der Folie herausgeführt wird. Nach Anlegen des Vakuums wir sich die Folie an die Kontur des Rippe anpassen und die Infusion des einfließenden Harzes endkonturnah abbilden.

## Patentansprüche

1. Verlängerungspasselement (4) für ein Rotorblatt (1, 2) einer Windenergieanlage, das als Rotorblattrippe mit einer Ausnehmung (4a) ausgebildet ist und das auf die Rotorblattspitze eines zu verlängernden Rotorblattes (1) derart aufschiebbar ist, dass die Rotorblattspitze durch die Ausnehmung hindurchragt und sich formschlüssig an die Umfangsfläche (6) der Ausnehmung anlegt, wobei das Verlängerungspasselement an seinem äußeren Umfang eine äußere Umfangsfläche (5) aufweist, auf die eine schalenförmige Rotorblattverlängerung (2) formschlüssig aufschiebbar ist,
**dadurch gekennzeichnet, dass** das Verlängerungspasselement einen Kern aus einem Leichtbauwerkstoff (17), insbesondere einem Schaumstoff, insbesondere PVC-Schaumstoff oder Balsaholz, aufweist und an seiner äußeren Umfangsfläche (5) und/oder an seiner inneren Umfangsfläche (6) eine Beschichtung aus einem Schichtverbundmaterial, insbesondere einem faserverstärkten Schichtverbundmaterial aufweist, wobei
der Kern des Verlängerungspasselements Ausnehmungen, insbesondere Schlitze und/oder Bohrungen (7, 19) aufweist, die mit einem Werkstoff gefüllt sind, der eine höhere Festigkeit und/oder Steifigkeit aufweist als der Werkstoff (17) des Kerns.

2. Verlängerungspasselement nach Anspruch 1, **dadurch gekennzeichnet, dass** die Ausnehmungen in der Form von Schlitzen und/oder Bohrungen (7, 19) insbesondere in dem Bereich, der bei der Verwendung an einem zu verlängernden Rotorblatt zwischen den Gurten (10a, 10b, 11a, 11b) des Rotorblattes liegt, mit ihren Schlitzebenen und/oder Bohrungslängsachsen quer, insbesondere senkrecht zur Profilsehne (20) des Verlängerungspasselements (4) verlaufen.

3. Verlängerungspasselement nach Anspruch 1 oder 2, **dadurch gekennzeichnet, dass** die Ausdehnung (D) des Verlängerungspasselements in Richtung (z) der Längsachse des Rotorblatts wenigstens 20 % seiner größten Ausdehnung (E) in Schwenkrichtung (t-Richtung) des Rotorblattes (1, 2) beträgt.

4. Verlängerungspasselement nach Anspruch 1, 2 oder 3, **dadurch gekennzeichnet, dass** der Kern Bohrungen (19) aufweist, deren Bohrungslängsachsen im Wesentlichen senkrecht oder in einem Winkel zwischen 90 und 45 Grad zur äußeren Umfangsfläche des Verlängerungspasselements (4) in einer Ebene senkrecht zur Profilsehne (20) des Verlängerungspasselements verlaufen und die mit einem Werkstoff gefüllt sind, der eine höhere Festigkeit und/oder Steifigkeit aufweist als der Werkstoff (17) des Kerns.

5. Verlängerungspasselement nach Anspruch 1, 2, 3 oder 4, **dadurch gekennzeichnet, dass** der Kern eine Mehrzahl von Bohrungen aufweist, deren Bohrungslängsachsen in einer Ebene senkrecht zur (Profilsehne (20) des Verlängerungspasselements (4) verlaufen und insbesondere untereinander jeweils paarweise Winkel zwischen 30 und 150 Grad, insbesondere 70 bis 110 Grad, einschließen und die mit einem Werkstoff gefüllt sind, der eine höhere Festigkeit und/oder Steifigkeit aufweist als der Werkstoff (17) des Kerns.

6. Verlängerungspasselement nach einem der Ansprüche 1 bis 4, **dadurch gekennzeichnet, dass** die Ausnehmungen, insbesondere Schlitze und Bohrungen, in dem Verlängerungspasselement derart positioniert sind, dass nach dem Einbau des Verlängerungspasselementes und der Rotorblattverlängerung wenigstens ein Teil der Ausnehmungen, insbesondere Schlitze und/oder Bohrungen (7, 19), im Bereich (19) der lasttragenden Bereiche des Profils des zu verlängernden Rotorblattes (1), insbesondere zwischen den Gurten (11a, 11b) des zu verlängernden Rotorblattes, angeordnet sind.

7. Verlängerungspasselement nach einem der Ansprüche 1 bis 6, **dadurch gekennzeichnet, dass** wenigstens ein Teil der Ausnehmungen, insbesondere Schlitze und/oder Bohrungen (7, 19), in den lasttragenden Bereichen (18) des Verlängerungspasselements (4) angeordnet ist und diese sich jeweils bis zu der Beschichtung an der äußeren oder inneren Umfangsfläche (5, 6) des Verlängerungspasselements erstrecken.

8. Verlängertes Rotorblatt (1, 2) für eine Windenergieanlage mit einem ursprünglichen Rotorblatt (1) und einem auf dieses aufgeschobenen Verlängerungspasselement (4) nach einem der Ansprüche 1 bis 7 sowie mit einer auf das Verlängerungspasselement aufgeschobenen Rotorblattverlängerung (2).

9. Verlängertes Rotorblatt (1, 2) für eine Windenergieanlage mit einem ursprünglichen Rotorblatt (1) und einem auf dieses aufgeschobenen Verlängerungspasselement (4) nach einem der Ansprüche 1 bis 7, wobei das Verlängerungspasselement mit einer Rotorblattverlängerung (2) verbunden ist, derart, dass das Verlängerungspasselement einen integralen Bestandteil der Rotorblattverlängerung bildet.

10. Verlängertes Rotorblatt (1, 2) für eine Windenergieanlage mit einem zu verlängernden Rotorblatt (1) und einem auf dieses aufgeschobenen Verlängerungspasselement (4) nach einem der Ansprüche 1 bis 7, wobei das Verlängerungspasselement mit einer Rotorblattverlängerung (2) verbunden ist, derart, dass eine Beschichtung aus einem Schichtverbundmaterial an der äußeren Umfangsfläche (5) des Verlängerungspasselementes eine Schicht der Rotorblattverlängerung (2) bildet.

11. Verfahren zur Herstellung eines Verlängerungspasselements (4) für ein Rotorblatt (1, 2) einer Windenergieanlage, das als Rotorblattrippe mit einer Ausnehmung (4a) ausgebildet ist und das auf die Rotorblattspitze eines zu verlängernden Rotorblattes (1) derart aufschiebbar ist, dass die Rotorblattspitze durch die Ausnehmung hindurchragt und sich formschlüssig an die Umfangsfläche (6) der Ausnehmung anlegt, wobei das Verlängerungspasselement an seinem äußeren Umfang eine äußere Umfangsfläche (5) aufweist, auf die eine schalenförmige Rotorblattverlängerung (2) formschlüssig aufschiebbar ist, **dadurch gekennzeichnet, dass** zunächst aus einem Leichtbauwerkstoff der Kern des Verlängerungspasselementes (4) geformt wird und dass darauf, ausgehend von einer inneren und/oder äußeren Umfangsfläche des Kerns, Schlitze (7) oder Bohrungen (19) in diesem geformt werden, wobei die Schlitzebenen sich quer, insbesondere senkrecht zur Profilsehne (20) des Verlängerungspasselementes (4) erstrecken oder die Bohrungslängsachsen sich in Richtung der so definierten Schlitzebenen erstrecken, und dass der Kern mit einem faserverstärkten Schichtverbundmaterial mit einem Verbund aus Matrixmaterial und Verstärkungsfasern beschichtet wird, wobei die Schlitze oder Bohrungen mit einem Infusionsmaterial, insbesondere mit dem Matrixmaterial gefüllt werden, wobei Schlitze/Bohrungen in einem einzelnen Schritt oder gemeinsam mit dem Verstärkungsfasern der Beschichtung im Vacuum Assisted Resin Transfer Molding (VARTM)-Verfahren mit einem Infusionsmaterial, insbesondere dem Matrixmaterial infundiert werden.

12. Verfahren nach Anspruch 11, **dadurch gekennzeichnet, dass** Schlitze/Bohrungen sowie die Ausnehmung und äußere Kontur mit einer Säge Fräse, Ultraschallmesser oder heißem Draht abgetragen werden.

13. Verfahren nach Anspruch 11 oder 12, **dadurch gekennzeichnet, dass** der Kern des Verlängerungspasselementes (4) entweder aus einem Block eines Leichtbauwerkstoffs, insbesondere eines Schaumstoffs, weiter insbesondere eines PVC-Schaumstoffs, durch Materialabtragung gebildet oder durch Schäumen in eine Form oder durch ein additives Herstellungsverfahren geformt wird.

14. Verfahren nach Anspruch 13, **dadurch gekennzeichnet, dass** der Kern des Verlängerungspasselementes (4) durch ein additives Herstellungsverfahren geformt wird, wobei die Schlitze (7) und/oder Bohrungen (19) unmittelbar bei dem additiven Herstellungsverfahren ausgenommen werden oder direkt durch einen Wechsel des Auftragskopfes mit einem anderen Werkstoff erzeugt werden, wobei die additive Auftragsstrategie entlang gekrümmter Bahnen für faserverstärkte Werkstoffe in 6 Achsen realisiert wird.

## Claims

1. An extension fitting element (4) for a rotor blade (1, 2) of a wind turbine, which extension fitting element is designed as a rotor blade rib with a recess (4a) and which can be pushed onto the rotor blade tip of a rotor blade (1) to be extended, in such a way that the rotor blade tip protrudes through the recess and contacts the circumferential surface (6) of the recess in an positive-locking manner, wherein the extension fitting element has, on its outer circumference, an outer circumferential surface (5) onto which a shell-like rotor blade extension (2) can be pushed in an positive-locking manner,
**characterized in that** the extension fitting element has a core made of a lightweight construction material (17), in particular a foam, in particular PVC foam, or balsa wood, and has, on its outer circumferential surface (5) and/or on its inner circumferential surface (6), a coating made of a layered composite material, in particular a fiber-reinforced layered composite material, and wherein
the core of the extension fitting element has recesses, in particular slits and/or boreholes (7, 19), which are filled with a material that has a higher strength and/or rigidity than the material (17) of the core.

2. The extension fitting element according to claim 1, **characterized in that** the recesses, in the form of slits and/or boreholes (7, 19), in particular in the region which lies between the flanges (10a, 10b, 11a, 11b) of the rotor blade in the event of use on a rotor blade to be extended, extend with their slit planes and/or longitudinal borehole axes transversely, in particular perpendicularly to the chord (20) of the extension fitting element (4).

3. The extension fitting element according to claim 1 or 2, **characterized in that** the expansion (D) of the extension fitting element in the direction (z) of the longitudinal axis of the rotor blade is at least 20% of the greatest expansion (E) of the extension fitting element in the pivot direction (t-direction) of the rotor blade (1, 2).

4. The extension fitting element according to claim 1, 2 or 3, **characterized in that** the core has boreholes (19), the borehole longitudinal axes of which extend substantially perpendicularly or at an angle between 90 and 45 degrees to the outer circumferential surface of the extension fitting element (4) in a plane perpendicular to the chord (20) of the extension fitting element and which are filled with a material that has a higher strength and/or stiffness than the material (17) of the core.

5. The extension fitting element according to claim 1, 2, 3 or 4, **characterized in that** the core has a plurality of boreholes of which the borehole longitudinal axes extend in a plane perpendicular to the chord (20) of the extension fitting element (4) and which in particular in pairs enclose an angle of between 30 and 150 degrees, in particular 70 to 110 degrees, to one another and are filled with a material that has a greater strength and/or stiffness than the material (17) of the core.

6. The extension fitting element according to one of claims 1 to 4, **characterized in that** the recesses, in particular slits and boreholes, in the extension fitting element are positioned in such a way that, once the extension fitting element and the rotor blade extension have been installed, at least some of the recesses, in particular slits and/or boreholes (7, 19), are arranged in the region (19) of the load-bearing regions of the profile of the rotor blade (1) to be extended, in particular between the flanges (11a, 11b) of the rotor blade to be extended.

7. The extension fitting element according to one of claims 1 to 6, **characterized in that** at least some of the recesses, in particular slits and/or boreholes (7, 19), are arranged in the load-bearing regions (18) of the extension fitting element (4) and in each instance extend as far as the coating on the outer or inner circumferential surface (5, 6) of the extension fitting element.

8. An extended rotor blade (1, 2) for a wind turbine with an original rotor blade (1) and an extension fitting element (4) according to one of claims 1 to 7 pushed onto said rotor blade, further comprising a rotor blade extension (2) pushed onto the extension fitting element.

9. An extended rotor blade (1, 2) for a wind turbine with an original rotor blade (1) and an extension fitting element (4) according to one of claims 1 to 7 pushed onto said rotor blade, wherein the extension fitting element is connected to a rotor blade extension (2) in such a way that the extension fitting element forms an integral part of the rotor blade extension.

10. An extended rotor blade (1, 2) for a wind turbine with a rotor blade (1) to be extended and an extension fitting element (4) according to one of claims 1 to 7 pushed onto said rotor blade, wherein the extension fitting element is connected to a rotor blade extension (2) in such a way that a coating formed from a layered composite material on the outer circumferential surface (5) of the extension fitting element forms a layer of the rotor blade extension (2).

11. A method for producing an extension fitting element (4) for a rotor blade (1, 2) of a wind turbine, which extension fitting element is formed as a rotor blade rib with a recess (4a) and which can be pushed onto the rotor blade tip of a rotor blade (1) to be extended, in such a way that the rotor blade tip protrudes through the recess and contacts the circumferential surface (6) of the recess in an positive-locking manner, wherein the extension fitting element has, on its outer circumference, an outer circumferential surface (5) onto which a shell-like rotor blade extension (2) can be pushed in an positive-locking manner, **characterized in that** the core of the extension fitting element (4) is firstly formed from a lightweight construction material, and **in that** then, starting from an inner and/or outer circumferential surface of the core, slits (7) or boreholes (19) are formed in the core, wherein the slit planes extend transversely, in particular perpendicularly, to the chord (20) of the extension fitting element (4) or the borehole longitudinal axes extend in the direction of the slit planes thus defined, and **in that** the core is coated with a fiber-reinforced layered composite material comprising a composite of matrix material and reinforcement fibers, wherein the slits or boreholes are filled with an infusion material, in particular with the matrix material, wherein slits/boreholes, in an individual step or jointly with the reinforcement fibers of the coating, are infused using the vacuum assisted resin transfer molding (VARTM) method with an infusion material, in particular the matrix material.

12. The method according to claim 11, **characterized in that** slits/boreholes as well as the recess and outer contour are removed using a saw, milling machine, ultrasonic cutter, or hot wire.

13. The method according to claim 11 or 12, **characterized in that** the core of the extension fitting element (4) is formed either from a block of a lightweight construction material, in particular a foam, more particularly a PVC foam, by material removal or by foaming into a mold or by an additive production method.

14. The method according to claim 13, **characterized in that** the core of the extension fitting element (4) is formed by an additive production method, wherein the slits (7) and/or boreholes (19) are hollowed out directly during the additive production method or are produced directly by replacing the application head with another material, wherein the additive application strategy is realized along curved paths for fiber-reinforced materials in 6 axes.

## Revendications

1. Élément de raccord d'allongement (4) pour une pale de rotor (1, 2) d'une éolienne, qui est conçu sous la forme d'une nervure de pale de rotor avec un évidement (4a) et qui peut être enfilé sur la pointe de pale de rotor d'une pale de rotor (1) à allonger de sorte que la pointe de pale de rotor s'introduit dans l'évidement et s'adapte par complémentarités de formes sur la surface de périphérie (6) de l'évidement, l'élément de raccord d'allongement présentant une surface de périphérie extérieure (5) sur sa périphérie extérieure, sur laquelle un allongement de pale de rotor en forme de cuvette (2) peut être glissé par complémentarité de formes,
**caractérisé en ce que** l'élément de raccord d'allongement présente un coeur en matériau léger (17), en particulier d'une mousse, en particulier une mousse de PVC ou du bois de balsa, et présente sur sa surface de périphérie extérieure (5) et /ou sur sa surface de périphérie intérieure (6) un revêtement en matériau composite stratifié, en particulier un matériau composite stratifié renforcé par des fibres, dans lequel
le coeur de l'élément de raccord d'allongement comprend des évidements, en particulier des fentes et/ou des perçages (7, 19) qui sont remplis d'un matériau qui présente une plus grande résistance et/ou rigidité que le matériau (17) du coeur.

2. Élément de raccord d'allongement selon la revendication 1, **caractérisé en ce que** les évidements sous forme de fentes et/ou de perçages (7, 19), en particulier dans la zone qui, lorsqu'ils sont utilisés sur une pale de rotor à allonger entre les ceintures (10a, 10b, 11a, 11b) de la pale de rotor se trouvent, avec leurs plans de fente et/ou leurs axes longitudinaux de perçage, s'étendant transversalement, en particulier perpendiculairement, à la corde de profil (20) de l'élément de raccord d'allongement (4).

3. Élément de raccord d'allongement selon la revendication 1 ou 2, **caractérisé en ce que** l'extension (D) de l'élément de raccord d'allongement dans la direction (z) de l'axe longitudinal de la pale de rotor est d'au moins 20 % de sa plus grande extension (E) dans la direction de pivotement (direction t) de la pale de rotor (1, 2).

4. Élément de raccord d'allongement selon la revendication 1, 2 ou 3, **caractérisé en ce que** le coeur présente des perçages (19) dont les axes longitudinaux de perçage sont sensiblement perpendiculaires ou forment un angle compris entre 90 et 45 degrés par rapport à la surface de périphérie extérieure de l'élément de raccord d'allongement (4) s'étendant dans un plan perpendiculaire à la corde de profil (20) de l'élément de raccord d'allongement et qui sont remplis d'un matériau qui présente une plus grande résistance et/ou rigidité que le matériau (17) du coeur.

5. Élément de raccord d'allongement selon la revendication 1, 2, 3 ou 4, **caractérisé en ce que** le coeur présente une pluralité de perçages dont les axes longitudinaux de perçage s'étendent dans un plan perpendiculaire à la corde de profil (20) de l'élément de raccord d'allongement (4) et en particulier en formant des angles de 30 à 150 degrés, en particulier de 70 à 110 degrés, et qui sont remplis d'un matériau qui présente une plus grande résistance et/ou une rigidité que le matériau (17) du coeur.

6. Élément de raccord d'allongement selon l'une quelconque des revendications 1 à 4, **caractérisé en ce que** les évidements, en particulier les fentes et les perçages, sont positionnés dans l'élément de raccord d'allongement de telle sorte qu'après le montage de l'élément de raccord d'allongement et de l'allongement de pale de rotor, au moins une partie des évidements, en particulier des fentes et/ou des perçages (7, 19), sont agencés dans la zone (19) des zones porteuses de charge du profil de la pale de rotor (1) à allonger, en particulier entre les ceintures (11a, 11b) de la pale de rotor à allonger.

7. Élément de raccord d'allongement selon l'une quelconque des revendications 1 à 6, **caractérisé en ce qu'**au moins certains des évidements, en particulier des fentes et/ou des perçages (7, 19), sont disposés dans les zones porteuses de charge (18) de l'élément de raccord d'allongement (4) et ceux-ci s'étendent chacun jusqu'au revêtement sur la surface de périphérie extérieure ou intérieure (5, 6) de l'élément de raccord d'allongement.

8. Pale de rotor allongée (1, 2) pour une éolienne avec une pale de rotor (1) à allonger et un élément de raccord d'allongement (4) enfilé sur celle-ci selon l'une quelconque des revendications 1 à 7 et avec un allongement de pale de rotor (2) enfilé sur l'élément de raccord d'allongement.

9. Pale de rotor allongée (1, 2) pour une éolienne comprenant une pale de rotor (1) à allonger et un élément de raccord d'allongement (4) enfilé sur celle-ci selon l'une quelconque des revendications 1 à 7, dans laquelle l'élément de raccord d'allongement est relié à un allongement de pale de rotor (2) de sorte que l'élément de raccord d'allongement fasse partie intégrante de l'allongement de pale de rotor.

10. Pale de rotor allongée (1, 2) pour une éolienne avec une pale de rotor (1) à allonger et un élément de raccord d'allongement (4) enfilé sur celle-ci selon l'une quelconque des revendications 1 à 7, dans laquelle l'élément de raccord d'allongement est relié à un allongement de pale de rotor (2) de sorte qu'un revêtement constitué d'un matériau composite stratifié sur la surface de périphérie extérieure (5) de l'élément de raccord d'allongement forme une couche de l'allongement de pale de rotor (2).

11. Procédé de fabrication d'un élément de raccord d'allongement (4) pour une pale de rotor (1, 2) d'une éolienne, qui est conçu sous la forme d'une pale de rotor avec un évidement (4a) et qui peut être enfilé sur la pointe de pale de rotor d'une pale de rotor (1) à allonger de sorte que la pointe de pale de rotor s'introduit dans l'évidement et s'adapte par complémentarité de formes sur la surface de périphérie (6) de l'évidement, dans lequel l'élément de raccord d'allongement présentant une surface de périphérie extérieure (5) sur sa périphérie extérieure, sur laquelle un allongement de pale de rotor en forme de cuvette (2) peut être enfilé par complémentarité de formes, **caractérisé en ce que** le coeur de l'élément de raccord d'allongement (4) est formé en un matériau léger et **en ce qu'**à partir d'une surface de périphérie intérieure et/ou extérieure du coeur, des fentes (7) ou des perçages (19) y sont formés, dans lequel les plans de fente sont transversaux, en particulier perpendiculaires à la corde de profil (20) de l'élément de raccord d'allongement (4), ou les axes longitudinaux des perçages s'étendent dans la direction des plans de fente ainsi définis, et **en ce que** le coeur est revêtu d'un matériau composite stratifié renforcé par des fibres avec un composite de matériau de matrice et de fibres de renforcements, dans lequel les fentes/perçages étant remplis d'un matériau d'infusion, en particulier avec le matériau de matrice, dans lequel les fentes/perçages sont remplis d'un matériau d'infusion, en particulier le matériau de matrice, en une seule étape ou conjointement avec les fibres de renforcement du revêtement dans le procédé de moulage par transfert de résine assisté sous vide (VARTM).

12. Procédé selon la revendication 11, **caractérisé en ce que** les fentes/perçages et l'évidement et le contour extérieur sont enlevés avec une scie, une fraise, un couteau à ultrasons ou un fil chaud.

13. Procédé selon la revendication 11 ou 12, **caractérisé en ce que** le coeur de l'élément de raccord d'allongement (4) est formée soit d'un bloc de matériau léger, en particulier d'une mousse, plus particulièrement d'une mousse de PVC, par enlèvement de matière, soit par moussage dans un moule ou par un procédé de fabrication additive.

14. Procédé selon la revendication 13, **caractérisé en ce que** le coeur de l'élément de raccord d'allongement (4) est formé par un procédé de fabrication additive, dans lequel les fentes (7) et/ou les perçages (19) sont éliminés directement lors du procédé de fabrication additive ou créés directement en changeant la tête d'application avec un matériau différent, dans lequel la stratégie d'application additive est mise en oeuvre le long de trajectoires courbes pour les matériaux renforcés par des fibres selon 6 axes.
